# EUROPEAN PATENT APPLICATION

(11) **EP 0 900 681 A1**
(43) Date of publication of application: **10.03.1999**
(21) Application number: 98307173.9
(22) Date of filing: 04.09.1998
(51) Int. Cl.: B60J 10/04, B60J 10/00, B60R 13/04

(54) **Improved door seal**

(30) Priority: 04.09.1997 GB 9718673
(71) Applicant: Commercial Body Fittings Ltd, Weilham Green, Hatfield AL9 7HF (GB)
(72) Inventor: Reeve, Andrew John, c/o Com. Body Fittings Ltd., Hatfield, Hertfordshire, AL9 7HF (GB)
(74) Representative: Whitaker, Iain Mark

(57) **Abstract**

A door seal for use on a lorry body, the door seal comprising a channel (21) consisting of a base (22) and first and second opposing channel walls (23,24), the channel (21) being adapted to fit around the edge of a lorry body door with the first channel wall outermost, the outermost surface of the channel base incorporating one or more flexible sealing strips adapted to form a substantially water-tight seal between a vehicle body door and a vehicle body, characterised in that the first channel wall is at least 5cm in height and in that it is adapted to incorporate a reflective finish.

## Description

### Field of The Invention

The present invention relates to door and curtain seals suitable for use on lorry bodies.

### Background to the Invention

The signage and safety marking of lorries continues to be the subject of ever tighter legislation. Lorries are often slow moving and this, coupled with their sheer size, represents a major hazard to other road users, especially in the dark. There is a growing trend to mark out the sides and rear of lorry bodies with reflective tape to alert other road users to their presence. As well as being reflective, this tape is also highly visible during daylight conditions. Typically a 2 inch or 5 cm wide reflective tape strip is applied by the lorry operator or constructor in suitable regions around the back and along the sides of the lorry. However, this can be a time consuming job and requires a good deal of care on the part of the operator to achieve a neat finish. It also requires that the lorries body is scrupulously cleaned before the tape is applied in order to ensure proper adhesion of the tape.

It is accordingly the object of the present invention to provide an improved means by which this reflective finish can be applied.

### Summary of the Invention

According to a first aspect of the present invention there is provided a door seal of the type in question comprising a channel consisting of a base and first and second opposing channel walls, the channel being adapted to fit around the edge of a lorry body door with the first channel wall outermost, the outermost surface of the channel base incorporating one or more flexible sealing strips adapted to form a substantially water-tight seal between a vehicle body door and a vehicle body, characterised in that the first channel wall is at least 5 cm in height and in that it is adapted to incorporate a reflective finish.

For the first time provision for a reflective finish has been incorporated in to a door seal. This provides a ready prepared surface onto which to apply reflective tape.

Preferably the outermost surface of the first channel wall incorporates a reflective finish. Further advantage is obtained by providing the door seal complete with a reflective surface. The reflective surface is therefore installed automatically around the lorry doors whenever the door seals are fitted.

Preferably the wall thickness of the first wall channel is greater in the region of the base than it is in the region farthest from the base. This facilitates the removal of part of the channel wall where it would otherwise come into conflict with door furniture such as hinges or fastening elements.

Preferably the tip of the second channel wall incorporates a flexible seal.

In a particularly preferred embodiment the first channel wall incorporates a flexible seal along its length in a region corresponding to substantially the same distance from the base as the seal on the tip of the second channel wall.

According to a second aspect of the present invention there is provided a door seal of the type in question comprising a channel consisting of a base and first and second opposing channel walls, the channel being adapted to fit around the edge of a lorry body door with the first channel wall outermost, the channel base incorporating a first sealing strip substantially aligned with the first channel wall characterised in that the first channel wall and first sealing strip are, in combination, at least 5 cm in width and adapted to incorporate a reflective finish.

Extending the seal and forming it from a material to which reflective tape will adhere forms an ideal surface onto which to apply such tape.

Preferably the door seal is supplied with a reflective finish already in place.

Preferably the door seal is constructed from a rigid PVC channel comprising a base and first and second channel walls and a flexible PVC seal incorporating a rigid PVC infill on its outermost in use face, the outer surface of the first channel wall and the sealing strip providing together in combination a sound surface onto which to fix reflective tape. Without the rigid, unplasticised PVC infill, adhesive tape cannot stick to the flexible seal region over a prolonged period. Suitably the rigid PVC channel and the flexible relatively plasticised PVC seal are co-extruded.

Preferably there is a gap between the rigid PVC infill and the first channel wall. This small gap allows the seal a greater degree of flexibility without significantly reducing the adherence of the reflective tape. Importantly, this gap runs down the middle of the strip of tape leaving the edges still firmly secured.

According to a third aspect of the present invention there is provided a seal suitable for use around a vehicle curtain comprising a flexible plastic strip incorporating along the uppermost and outermost in use face a rigid plastic infill strip adapted to incorporate a reflective finish.

Preferably the seal is supplied with a reflective finish already in place.

### Description of the Drawings

The invention will be further described, by way of example only, with reference to the accompanying drawings in which:-
Figures 1 to 3 illustrate perspective and cross-sectional views of door seals of various widths according to a first aspect of the present invention;
Figures 4 to 6 inclusive illustrate perspective and cross-sectional views of door seals of various widths according to a second aspect of the present invention;
Figures 8 and 9 illustrate a cross section and perspective view respectively of a curtain seal according to a third aspect of the present invention;
Figure 10 illustrates a conventional door seal of the type known in the prior-art.

### Description of the Preferred Embodiments

Aspects and embodiments of the present invention are described below by way of example only. These examples represent the best ways of putting the invention into practice that are currently known to the applicant although they are not the only ways in which this could be achieved.

A typical door seal 10 of the type known *per se* is shown in figure 10 and referred to as seals of the type in question. This seal consists of a channel 11 typically extruded from rigid PVC. The channel is formed from a base 12 and two side walls 13 and 14. The outermost lip of each side wall carries a flexible seal 15 to prevent ingress of dirt and water around the channel when the seal is in place.

Extending from the base and away from the side wall are two flexible seals, again typically made from PVC. In use, lengths of channel are fixed around the edges of a door and the shorter seal 17 forms a seal between the door frame and the door. The longer seal 16 overlaps and covers the small gap between the door and the frame when the door is in the closed position.

A door seal is not an obvious place to mount reflective material for a number of reasons. First, the side walls are not wide enough to carry the width of tape, typically 5 cm, which hauliers use. Secondly, although the combined width of side wall 13 and flexible seal 16 is sometimes sufficient, self-adhesive tape will not adhere consistently to the flexible strip. This is because, by its very nature, the flexible strip is heavily plasticised and ultimately the plasticiser migrates to the surface and causes the reflective finish and sealing strip to separate.

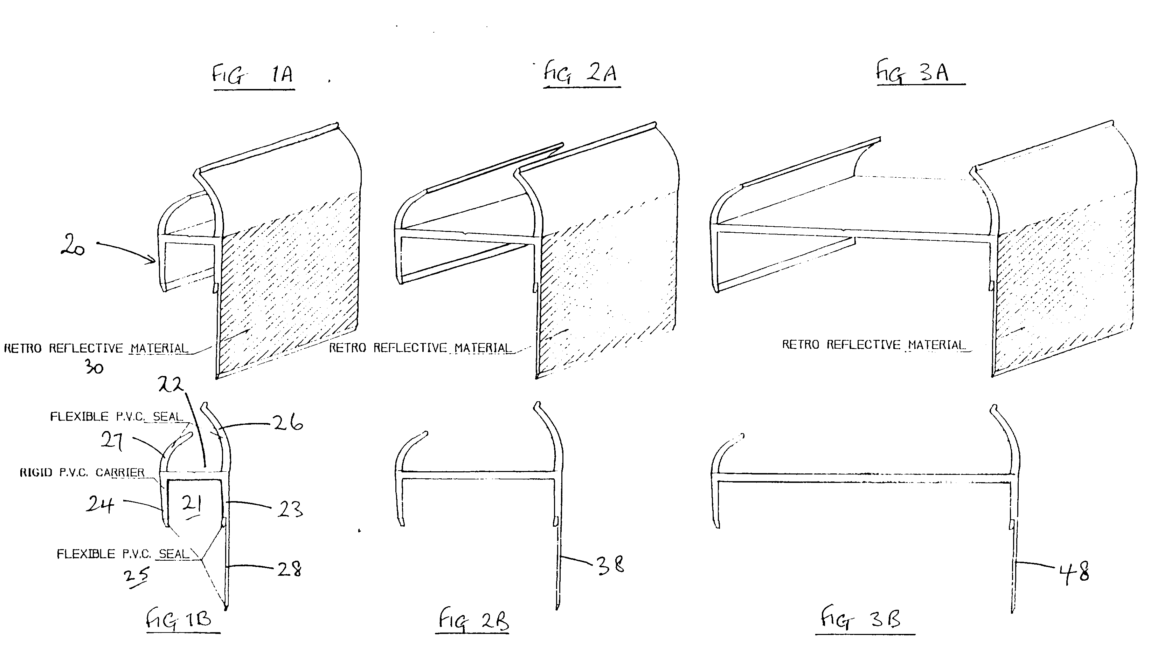

Improved door seals according to a first aspect of the invention are shown in figures 1 to 3 where equivalent numbering has been used. These seals share many of the features of the original, being essentially a channel 21 constructed from a base 22 and side walls 23, 24. However, importantly the side wall 23 which fits over the outside of the door is extended 28 beyond the seal region 25 to give a smooth rigid base upon which to apply a reflective surface.

Preferably the extension 28 is thinner in cross section than the main body of the channel as shown in figure 1b. It can also carry at its tip a flexible PVC seal. The purpose of this extension is to provide, in combination with the side wall region 23, a strip wide enough for the reflective material.

The nature and function of the flexible PVC seals remain the same as in the prior-art in this particular embodiment.

Keeping the extension region 28 to the side wall 23 thin has a number of advantages. There is a good deal of door furniture on lorry doors and the seals inevitably have to be cut around these. A thin profile is easily cut with a sharp knife or with clippers. Also, it conserves raw materials and therefore saves on costs.

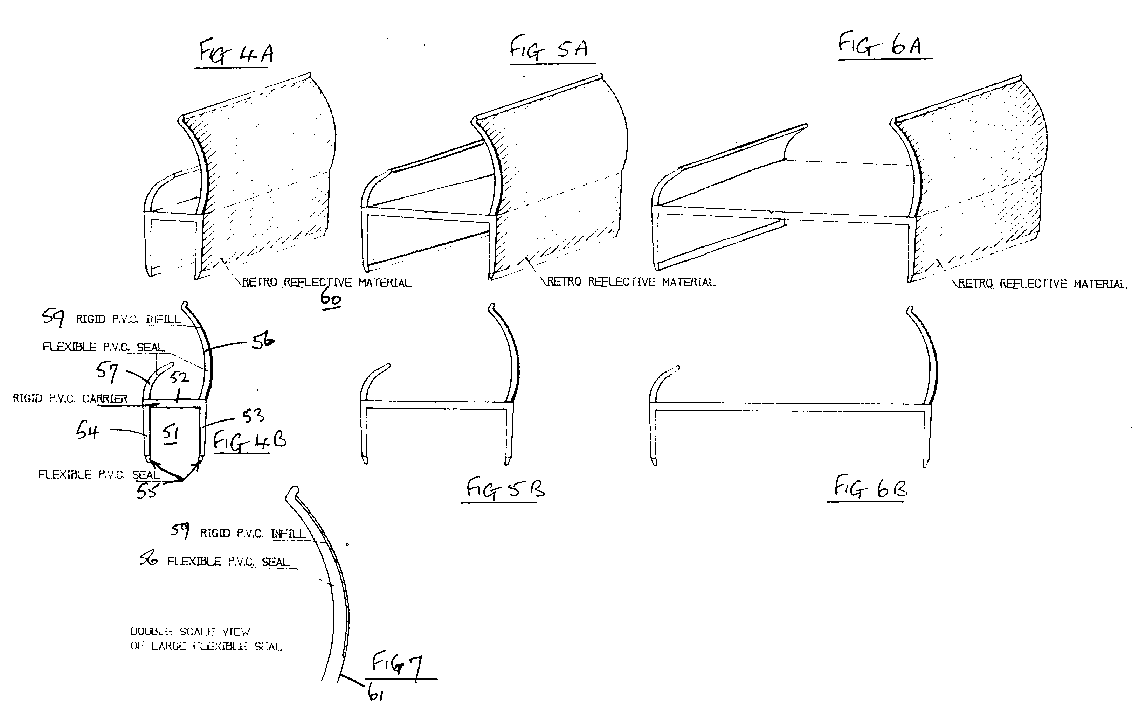

A second aspect of the present invention is illustrated in figures 4 to 7 inclusive. In this embodiment the channel itself 51 remains essentially as shown in figure 10. The inner flexible seal 57 is also substantially as illustrated in the prior-art. However, the outer flexible seal 56 is substantially longer than in the prior-art such that the width of the side wall 53 and seal 56 in combination is wide enough to accommodate a reflective strip of the desired width. This is typically 5 cm but may be smaller or larger depending on requirements and the regulations in force at any particular time.

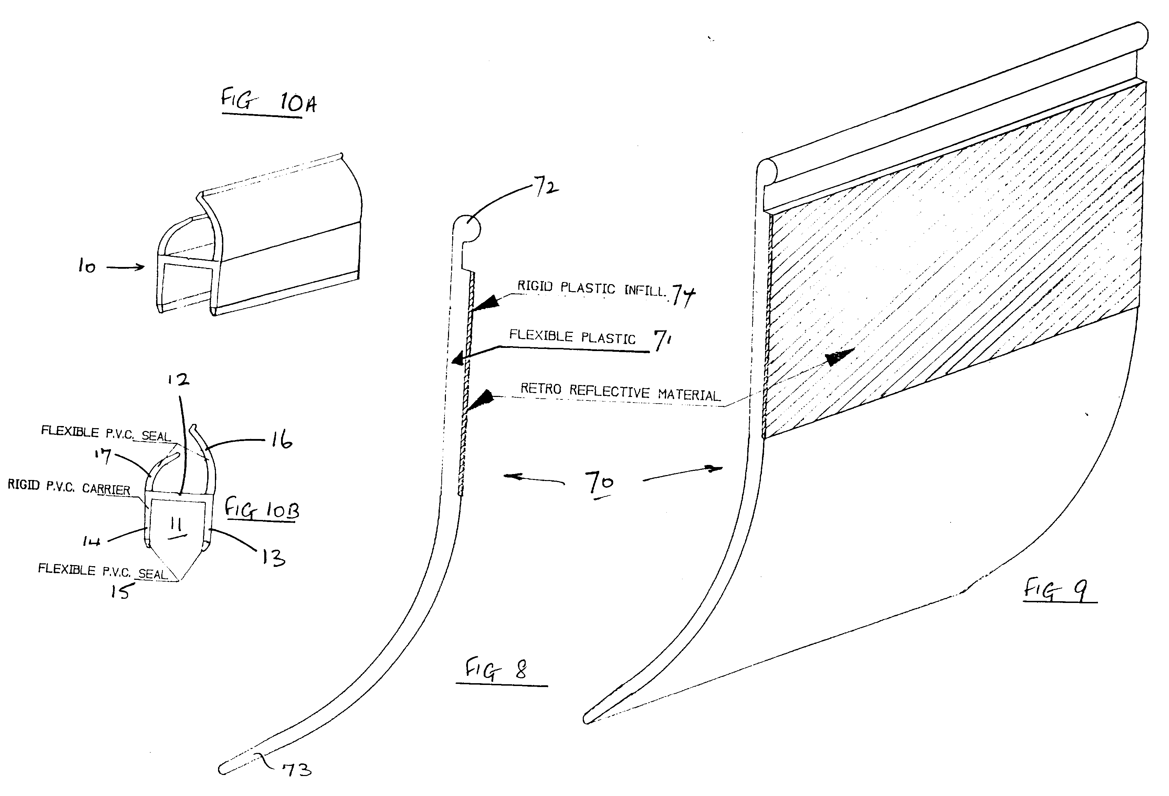

Importantly, the flexible strip is reinforced with a rigid, ie unplasticised, relatively thin layer PVC infill 59, shown more clearly in figure 7. This infill is necessary to ensure proper adhesion of the reflective finish 60.

In an embodiment, as illustrated in Figure 7, there is a region of the strip 61 which is not reinforced by rigid PVC. This ensures that the seal can flex in the region where it joins component does not fracture if the seal is distorted. This can easily happen if something is caught between the seal and the door or doorframe. The narrow region 61 where plasticised PVC is in contact with the reflective finish has little effect on the overall adhesion since it represents less than 10% of the surface area. However, it can have a significant effect on the overall performance on the door seal itself.

This technology has been applied to the type of seal used on curtain sided lorries where a flexible rubber strip is used to conceal the curtain mechanism. This aspect is illustrated in figures 8 and 9. Seals of this general type are known and consist of a flexible plastic strip 71 which curves in towards the curtain at the lower end 73. The strip is held in place by way of a bead 72 which is contained within a circular housing on the side of the lorry or curtain mechanism.

As part of this invention a rigid plastic infill 74 is incorporated into the outerface of the strip and this acts as a firm platform onto which to apply a reflective finish.

The technology by which these multi-component extrusions can be produced are already known. Furthermore, the exact choice of materials can be determined by a materials specialist. PVC is only one possible material and in principle any plastics material with the desired properties could be used.

The reflective finish can be formed from any suitable material. It may be self-adhesive reflective tape or it could be any reflective finish which can be applied by any means or mechanism to the surface of the door seal. This includes the co-extrusion of the reflective material, in bead or other format, along with the PVC elements.

## Claims

1. A door seal for use on a lorry body, the door seal comprising a channel consisting of a base and first and second opposing channel walls, the channel being adapted to fit around the edge of a lorry body door with the first channel wall outermost, the outermost surface of the channel base incorporating one or more flexible sealing strips adapted to form a substantially water-tight seal between a vehicle body door and a vehicle body, characterised in that the first channel wall is at least 5 cm in height and in that it is adapted to incorporate a reflective finish.

2. A door seal as claimed in Claim 1, wherein the outermost surface of the first channel wall incorporates a reflective finish.

3. A door seal as claimed in Claim 2 wherein the door seal is supplied complete with a reflective surface.

4. A door seal as claimed in Claim 1, 2 or 3, wherein the wall thickness of the first wall channel is greater in the region of the base than it is in the region farthest from the base.

5. A door seal as claimed in any preceding claim, wherein the tip of the second channel wall incorporates a flexible seal.

6. A door seal as claimed in any preceding claim, wherein the first channel wall incorporates a flexible seal along its length in a region corresponding to substantially the same distance from the base as the seal on the tip of the second channel wall.

7. A door seal for use on a lorry body, the door seal comprising a channel consisting of a base and first and second opposing channel walls, the channel being adapted to fit around the edge of a lorry body door with the first channel wall outermost, the channel base incorporating a first sealing strip substantially aligned with the first channel wall characterised in that the first channel wall and first sealing strip are, in combination, at least 5 cm in width and adapted to incorporate a reflective finish.

8. A door seal as claimed in Claim 7, wherein the door seal is supplied with a reflective finish already in place.

9. A door seal as claimed on any preceding claim, wherein the door seal is constructed from a rigid PVC channel comprising a base and first and second channel walls and a flexible PVC seal incorporating a rigid PVC infill on its outermost in use face, the outer surface of the first channel wall and the sealing strip providing together in combination a sound surface onto which to fix reflective tape.

10. A seal suitable for use around a vehicle curtain comprising a flexible plastic strip incorporating along the uppermost and outermost in use face a rigid plastic infill strip adapted to incorporate a reflective finish.
